# EUROPÄISCHE PATENTANMELDUNG

(11) **EP 1 404 080 A1**
(43) Veröffentlichungstag der Anmeldung: **31.03.2004**
(21) Anmeldenummer: 02021440.9
(22) Anmeldetag: 25.09.2002
(51) Int. Cl.: H04L 29/06

(54) **Verfahren zur Abwehr von Angriffsdatenströmen auf Netzknoten in einem Kommunikationsnetz**

(71) Anmelder: SIEMENS AKTIENGESELLSCHAFT, 80333 München (DE)
(72) Erfinder: Stademann, Rainer, Dr., 85658 Egmating (DE)
(74) Vertreter: Berg, Peter, Dipl.-Ing.

(57) **Zusammenfassung**

Verfahren zur Abwehr von Angriffsdatenströmen auf Netzknoten in einem Kommunikationsnetz, das einen Übertragungskanal für die Übermittlung eines Dienstes zwischen einem dienstanbietenden Netzknoten und einem dienstanfordernden Netzknoten bereit stellt, wobei der dienstanbietende Netzknoten den Dienst in aufeinander folgenden Zeitintervallen mit jeweils unterschiedlichen aktiven Netzadressen anbietet, die er vorab mit einer Klasse von dienstanfordernden Netzknoten vereinbart.

## Beschreibung

### Bezeichnung der Erfindung

Die Erfindung betrifft ein Verfahren und eine Einrichtung zur Abwehr von Angriffsdatenströmen auf Netzknoten in einem Kommunikationsnetz, das einen Übertragungskanal für die Übermittlung eines Dienstes zwischen einem dienstanbietenden und einem dienstanfordernden Netzknoten bereit stellt.

### Stand der Technik

Ein Kommunikationsnetz verbindet örtlich verteilte Kommunikationspartner um zweckgebunden Informationen zu übertragen bzw. auszutauschen. Das Telekommunikationsnetz ist ein länderüberspannendes Nachrichtennetz, das den Teilnehmern eine interpersonelle Kommunikation global möglich macht. Anfänglich waren die Fernsprechnetze regional und ausschließlich zur Übermittlung von Sprachinformationen konzipiert, sie sind heute weltweit vernetzt und übertragen neben Sprachinformation auch Daten. Der physikalische Übertragungsweg wird durch ein Teilstreckennetz gebildet, das durch Vermittlungsknoten die abschnittsweise Aneinanderreihung von Streckenabschnitten herstellt. Vermittlungsknoten sind im wesentlichen Rechner, denen die Aufgabe obliegt, den Verkehrsstrom der Nutzinformation zu steuern und zu übertragen.

In den letzten Jahren hat sich mit unvergleichbarem Wachstum der Teilnehmerzahlen, des Leistungsvermögens und des technologischen Fortschritts das Internet zu einem dienstübergreifenden Instrument entwickelt, das sowohl im kommerziellen als auch im privaten Bereich zunehmend an Bedeutung gewinnt. Das Internet ist ein weltweiter Rechnerverbund aus einer Vielzahl autonomer Netze mit unterschiedlicher Leistungsfähigkeit. Die Knoten des Netzes agieren je nach Rolle als dienstanfordernde oder dienstbereitstellende Stelle, d.h. als Client oder als Server. Das Internet ist dezentral organisiert. Im Gegensatz zu den vielfältigen Standardisierungen und Normen des Fernsprechnetzes treffen internationale Organisationen des Internets lediglich Empfehlungen. Es gibt keine zentrale Verwaltung und auch keinen zentralen Betrieb.

In letzter Zeit sind Sprach- und Datennetze immer schwerer abgrenzbar. Das Telekommunikationsnetz und das Internet wachsen immer mehr zusammen. Das Internet wird zunehmend auch in den Aufbau von Fernsprechverbindungen, sogenannten "Voice over IP-Verbindungen", einbezogen.

In jüngster Zeit haben Angriffe auf Internet-Server große öffentliche Aufmerksamkeit erlangt. Bedingt durch diese Angriffe waren Netzknoten des Internets über mehrere Tage hinweg nicht funktionsfähig. Im Netz angebotene Dienste waren für Endbenutzer nicht zugänglich. Ein Prinzip dieser Angriffe beruht darauf, auf einen Netzknoten eine sehr große Anzahl von Zugriffsbefehlen bzw. Anfragen zu richten und durch eine Flut von Daten die Ressourcen des Rechners zu erschöpfen. Ziel ist es, den Rechner durch die Attacke lahm zu legen oder zumindest in seiner Funktion stark einzuschränken. Ein Beispiel hierfür ist die sogenannte "SYN-Attacke". Hierfür wird die Tatsache genutzt, dass Netzknoten, die im Internet in einer Client- und Serverrolle agieren oft einen Drei-Wege-Handshake Mechanismus ausführen. Dieser Mechanismus, der im Transmission Control Protokoll (TCP) organisiert ist und bei sogenannten halboffenen Verbindungen zwischen den kommunizierenden Rechnern entstehen, ist bei einem Angriff besonders verletzbar: Der Client sendet eine Synchronisationsnachricht (SYN) an den Server, der mit einem entsprechenden Acknowledgement (ACK/SYN) antwortet. Darauf hin sendet der Client sein Acknowledgement (ACK) an den Server. Hier greift die sogenannte Denial-of-Service-Attacke (DoS) an und nutzt die Tatsache, dass der Server die halboffene Verbindungen speichern muss, bis er eine Antwort erhält. Im Fall des Missbrauchs wird diese Antwort aber nie gegeben. Der Server muss alle halboffenen Verbindungen im Speicher halten. Der Angreifer sendet aber fortwährend eine Flut von derartigen Anfragen an sein Opfer. Bei einer Angriffsvariante, der sogenannten Distributed-Denial-of-Service-Attacke (DDoS) sind mehrere Angreifer beteiligt. Diese Angreifer sind im Netz verteilt. Mit zunehmendem Verbrauch der Ressourcen des angegriffenen Server-Netzknotens kann es sehr schnell dazu kommen, dass er nicht mehr auf Anfragen seiner Clients reagieren kann. Aus Sicht des Clients verweigert der Server die von ihm angeforderte Dienstleistung. Es kann dazu kommen, dass der Speicher eines derart attackierten Servers überläuft und der Server abstürzt. Der Server ist dann im Netz lahmgelegt. Wird über einen derart attackierten Server eine Fernsprechverbindung geführt, kann es dazu kommen, dass die Voice-over-IP-Verbindung unterbrochen wird.

Es sind verschiedene Methoden zur Abwehr von Angriffen auf Netzknoten bekannt. Eine Möglichkeit, Angriffe abzuwehren, ist eine Authentisierung der den Dienst anfordernden Stelle, beispielsweise durch Einrichtungen, wie sie unter dem Sammelbegriff Firewall bekannt sind. Eine Firewall ist eine Schutzmaßnahme, die aus Hardware- und/oder Software-Komponenten sowie einem Satz von weiteren Regeln und Protokollen besteht, welche den Zugriff zwischen einem zu schützenden Netz und den Internen überwachen bzw. beschränken. Praktisch kann eine Firewall so ausgeführt sein, dass dem Rechner, der den eigentlichen Dienst bereit stellt, eine leistungsfähige Einrichtung vorgeschaltet wird, die die Berechtigung aller eintreffenden Dienstanforderungen durch Passworte oder durch kryptographische Technik, wie elektronische Signaturen, prüft. Aber auch dann, wenn ein Rechner dazu eingerichtet ist, gefälschte Nachrichten zu erkennen, ist der Schutz oft unzureichend, da der Angreifer stets versuchen wird seine gefälschte Nachricht so weit wie möglich zu tarnen.

### Darstellung der Erfindung

Aufgabe der Erfindung ist es, ein Verfahren und eine Einrichtung so anzugeben, dass Netzknoten in einem Kommunikationsnetz besser vor Angriffsdatenströmen geschützt werden können.

Diese Aufgabe wird erfindungsgemäß bei einem Verfahren der eingangs genannten Art mit den kennzeichnenden Merkmalen des Patentanspruchs 1, bei einer Einrichtung mit den Merkmalen des Patentanspruchs 12 gelöst. Auf vorteilhafte Ausgestaltungen der Erfindung nehmen die jeweiligen Unteransprüche Bezug.

Bei dem erfindungsgemäßen Verfahren ist vorgesehen, dass der dienstanbietende Netzknoten den Dienst nicht unter einer festen Adresse, sondern in aufeinander folgenden Zeitintervallen mit unterschiedlichen aktiven Netzadressen anbietet, die er vorab mit einer Klasse ausgewählter dienstanfordernder Netzknoten vereinbart hat. Im Gegensatz zur Verwendung einer statischen Netzadresse schlägt die Erfindung also vor, die Netzadresse zeitlich zu variieren. Für die Annahme einer Dienstanforderung setzt der Server voraus, dass der Anfragende die zu einem Zeitpunkt gültige Netzadresse des Dienstes kennt und dass der Anfragende zu einer Klasse von Netzknoten gehört, die berechtigt ist, den Dienst anzufordern. Nur berechtigte Dienstnutzer wissen, zu welchem Zeitpunkt und unter welcher Adresse oder welchen Adressen der Dienst jeweils zur Verfügung steht. Dadurch können nur berechtigte Clients einen Server mit einer Anfrage belegen. Das Risiko, dass z.B. halboffene Verbindungen missbräuchlich von unberechtigten Clients generiert werden, ist so weitgehend reduziert. Da die Netzadressen ständig verändert werden, verringert sich die Wahrscheinlichkeit, dass missbräuchliche Anfragen im Netz einen Netzknoten lahm legen können.

Von besonderem Vorteil ist es, wenn der dienstanbietende Netzknoten den Dienst unter einer Menge von Netzadressen anbietet, von denen in einem Zeitintervall nur eine Teilmenge aktiv ist. Dadurch kann einerseits der Dienst effizient bereitgestellt werden, anderseits wird einem Angreifer wirksam entgegengetreten.

Mehrere Netzadressen für einen Dienst erlauben auf einfache Weise eine Lastverteilung der Dienstanforderungen auf mehrere Server einer Serverfarm. Dadurch können einerseits mehr Dienstanforderungen bearbeitet werden, andererseits erhöht sich die Dienstverfügbarkeit, da bei Ausfall eines Servers, der Dienst von den anderen Servern der Serverfarm aufrecht erhalten werden kann. Außerdem bleibt der Dienst auch bei erfolgreichem Angriff auf eine der Adressen unter den übrigen Adressen weiterhin verfügbar. In der Praxis sind Serverfarmen von zwei bis zu ca. 50 Servern üblich.

Von besonderem Vorteil ist, wenn der dienstanbietende Netzknoten die aktiven Netzadressen aus einer Vorschrift ermittelt, die nur dem dienstanbietenden Netzknoten und der Klasse ausgewählter Netzknoten bekannt ist. Für einen Angreifer, der die geheime Vereinbarung zwischen Client und Server nicht kennt, ist es dadurch besonders schwierig, einen Client erfolgreich zu attackieren.

Eine geheime Liste, die Einträge enthält, nach der die Teilmenge der aktiven Netzadressen verändert werden, ist hierbei eine besonders einfach zu handhabende Ausgestaltung der Vereinbarung.

Eine andere besonders einfache Ausgestaltung ist es auch, wenn dienstbereitstellender und dienstanfordender Netzknoten die nächste zu verwendende Teilmenge der Netzadressen durch Pseudo-Zufallsgeneratoren berechnen. Dazu vereinbaren die Netzknoten für jede aktive Netzadresse einen gemeinsamen, geheimgehaltenen "Seed" mit der ein Pseudo-Zufallszahlengenerator initialisiert wird. Bei einem "Seed" handelt es sich um eine sehr große, im Regelfall natürliche Zahl aus der ein Pseudo-Zufallszahlengenerator eine endlose Folge von zufällig erscheinenden Zahlen berechnen kann. Die Zahlen dieser Folge sind so beschaffen, daß sie wesentliche Kriterien einer statistischen Unabhängigkeit (Zufälligkeitskriterien) erfüllen. Dennoch ist die gesamte Zahlenfolge durch die verwendete "Seed" vollständig determiniert. Aus den so erzeugten Pseudo-Zufallszahlen wird die nächste aktive Netzadresse berechnet. Da alle berechtigten Netzknoten die gleiche geheime "Seed" zur Initialisierung ihrer Pseudo-Zufallszahlengeneratoren verwendet haben, werden alle Netzknoten die gleichen Pseudo-Zufallszahlen und damit auch die gleiche aktive Netzadresse berechnen. Diese Ausprägung des Verfahrens vermeidet den Austausch großer geheimer Datenmengen.

In einer besonderen Ausgestaltung sieht die Erfindung vor, dass der dienstanbietenden Netzknoten die aktuellen aktiven Netzadressen an die dienstanfordernden Netzknoten übermittelt.

Hierbei ist es günstig, wenn die Übermittlung der aktuellen aktiven Netzadressen verschlüsselt erfolgt, damit ein potentieller Angreifer diese nicht abhören kann. Hierzu können die an sich bekannten Verfahren der Verschlüsselung eingesetzt werden. Der Vorteil dieser Ausgestaltung liegt darin, daß der dienstanbietende Netzknoten, jederzeit die aktive Netzadresse(n) von sich aus ändern kann, ohne daß vorher alle dienstanfordernden Netzknoten mit neuen geheimen Daten versorgt werden müssen. Somit kann der dienstanbietende Netzknoten auf Angriffe unmittelbar durch Wechsel der aktive Netzadresse(n) reagieren. Dadurch läßt sich trotz minimaler Adreßwechsel die Diensteverfügbarkeit erhöhen.

Es kann auch von Vorteil sein, wenn die dienstanfordernden Netzknoten periodische Anfragen an den dienstanbietenden Netzknoten richten und durch eine Abfrage ermitteln, welche Netzadressen aktiv sind. Dadurch wird die Aktivität für die Angriffsabwehr auf die Seite der Clients verlagert und der Server entlastet.

Es ist von besonderem Vorteil, wenn der dienstanbietende Netzknoten eine Authentisierung der Klasse der ausgewählten Netzknoten durchführt die folgende Schritte umfasst:
1) Erfassen der Netz-Quelladressen eingehender Dienstanforderungen;
2) Vergleichen der Netz-Quelladressen mit einem Eintrag ausgewählter Netz-Quelladressen; und
3) Bearbeiten der Dienstanforderung für den Fall der Übereinstimmung und Verwerfen der Dienstanforderung für den Fall der Nichtübereinstimmung. Der Server verwirft also automatisch alle Nachrichten, die nicht aus einer aktiven Quelladresse stammen und an eine aktive Zieladresse gerichtet sind. Es ist sehr unwahrscheinlich, dass ein Angreifer die aktive Adresse eines anfordernden als auch die eines dienstbereitstellenden Rechners herausfindet. Ein Missbrauch ist dadurch weitgehend ausgeschlossen.

Die erfindungsgemäße Einrichtung wird durch eine Firewall gebildet, die eine clientseitige Schutzeinrichtung (F) umfasst, die zwischen einem dienstanfordernden Netzknoten (C) und einem Kommunikationsnetz (IP-Network) geschaltet ist, sowie eine serverseitige Schutzeinrichtung (G), die zwischen einem dienstbereitstellenden Netzknoten (S) und dem Kommunikationsnetz (IP-Network) geschaltet ist. Die clientseitige Schutzeinrichtung (F) ist so eingerichtet, dass sie eine Ziel-IP-Portnummer eines vom Client (C) abgesandten IP-Pakets anhand einer Vorschrift in eine aktive IP-Portnummer der serverseitigen Schutzeinrichtung (G) umsetzt. Die serverseitige Schutzeinrichtung ist so eingerichtet, dass sie die aktive IP-Portnummer in eine IP-Portnummer des Servers umsetzt. Dabei greifen beide Schutzeinrichtung jeweils auf Speichermittel (L) zu, die eine Vorschrift enthält, nach der aktive Netzadressen verändert werden. Die Vorschrift ist geheim, d.h. sie ist nur dem Server und dem bzw. den berechtigen Clients bekannt.

Eine einfache Ausführungsform der Einrichtung kann so ausgebildet sein, dass die Vorschrift eine Tabelle enthält, in der eine Zuordnung zwischen Zeitintervallen und aktiven Netzadressen enthalten ist.

### Kurzbeschreibung der Zeichnungen

Der Gegenstand der Erfindung wird nachfolgend anhand der Zeichnungen weiter verdeutlicht. Es zeigen:
- Figur 1: ein Schichtenmodell der Client-Server-Kommunikation im Internet;
- Figur 2: in einer schematischen Darstellung ein Angriffsszenario auf einen dienstanbietenden Netzknoten im Internet;
- Figur 3: ein Diagramm, das die Verwendung der erfindungsgemäßen aktiven Netzadressen als Funktion der Zeit darstellt;
- Figur 4: in einer schematischen Darstellung eine besondere Ausgestaltung der Erfindung, bei der aktive Quelladressen der Clients die Anfragen authentifizieren;
- Figur 5: in einer schematischen Darstellung eine erfindungsgemäße Firewall.

### Ausführung der Erfindung

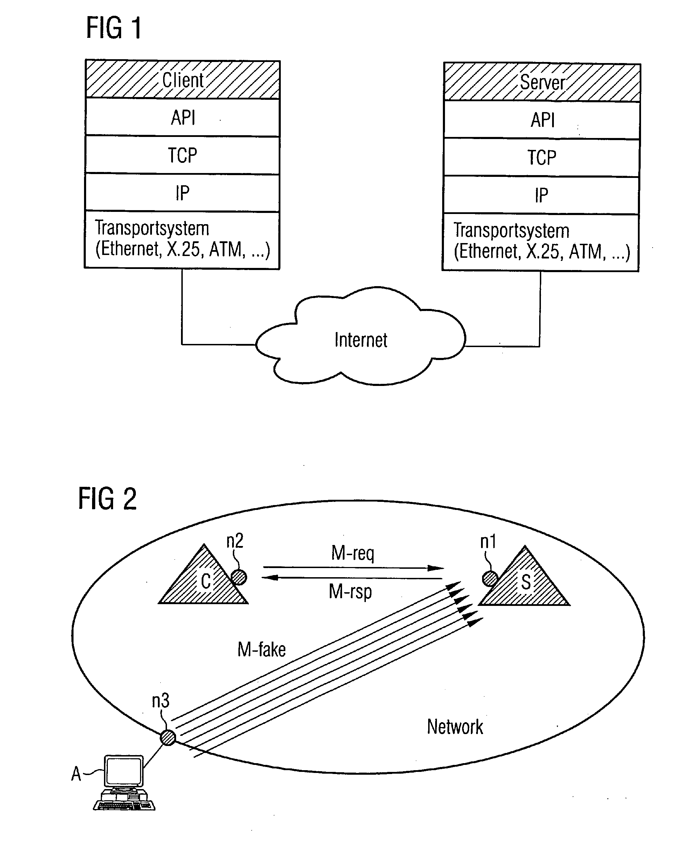

Die Figur 1 zeigt ein Schichtenmodell der Client-Server-Kommunikation wie es der Abwicklung einer Dienstanforderung im Internet zu Grunde liegt. Der Internetdienst setzt im Schichtmodell auf einer spezifischen Programmierschnittstelle (Application Programming Interface) (API) unmittelbar auf dem Transmission Control Protokoll(TCP) und dem Internet Protokoll (IP) auf. Der Dienst wird von dort über Port-Nummern angesprochen. Bei der Adressierung eines Rechners im Internet verwendet ein Benutzer einen Domaine-Namen, für den die IP-Adresse vor Beginn der Übertragung durch den Domain Name Service (DNS) zu ermitteln ist. Die Zuordnung zwischen IP-Adresse und Hardware-Adresse erfolgt durch das Address-Resolution-Protokoll (ARP), einem Protokoll auf der IP-Protokollschicht. Auf der untersten Ebene des Schichtenmodells liegt das Transportsystem, beispielsweise in den an sich bekannten Standards Ethernet, X.25, ATM.

Figur 2 zeigt ein Angriffsszenario auf einen Rechner S, der in der Rolle eines Servers, mit einem zweiten Rechner C, der als Client agiert, in Verbindung steht. Ein Kommunikationsteilnehmer A richtet in missbräuchlicher Absicht auf den Client C einen Angriffsdatenstrom M-fake. Der Angriffsdatenstrom M-fake zielt auf die halboffene Verbindung des TCP Protokolls: Dazu sendet der Client C eine Anforderungs-Nachricht (M-req) an die Netzadresse n1 des Servers S. Der Server S antwortet mit einer Nachricht M-rsp, die er an die Netzadresse n2 des Client C sendet. Auch der Teilnehmer A sendet Dienstanforderungen von seinem Zugang n3 an den Server. Wie eingangs dargestellt, führt jede dieser Anfragen zu einem Speichervorgang im Server. Da die Quittung von Teilnehmer A nie abgesandt wird, kann der Angriff dazu führen, dass die Speicherressourcen des Servers schnell verbraucht sind und der Rechner abstürzt.

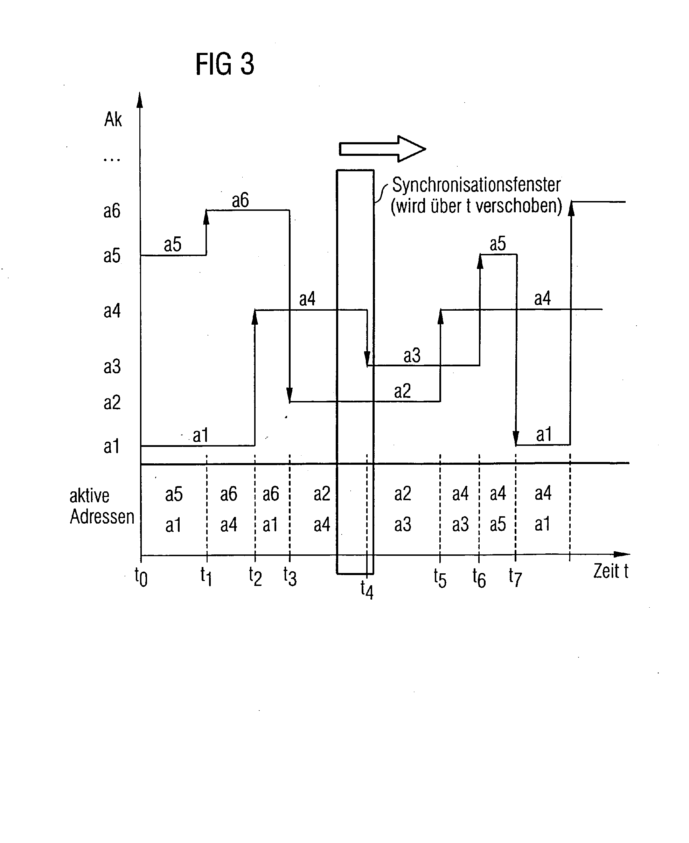

Die Figur 3 zeigt in einem Diagramm die Verwendung der erfindungsgemäßen aktiven Netzadressen als Funktion der Zeit. Ein Dienst wird anstatt unter einer festen Netzadresse n1 unter einer Menge von Netzadressen a1, a2,... angeboten. In einem Zeitintervall wird nur eine Teilmenge dieser Netzadressen vom Server S akzeptiert. Im Beispiel der Figur 3 werden ankommende Nachrichten mit Dienstanforderungen im ersten Zeitintervall, dh. vom Zeitpunkt t0 bis zum Zeitpunkt t1, nur unter den Netzadressen a1 und a5 angenommen. Im darauf folgenden Zeitintervall t1 bis t2, unter den Netzadressen a1 und a6, im Zeitintervall t2 bis t3 nur unter den aktiven Netzadressen a4 und a6, u.s.w. Durch ein sogenanntes Synchronisationsfenster, das längs der Zeitachse verschoben wird, kann vermieden werden, daß Client und Server immer exakt synchronisiert sein müssen. Hierzu läßt der Server auch Dienstanforderungen zu Netzadressen zu, die zu benachbarten Zeitintervallen gehören, solange diese Zeitintervalle vom Synchronisationsfenster ganz oder teilweise erfaßt werden. Somit sind während einer Übergangszeit, die der Breite des Synchronisationsfensters entspricht, auch noch die Adressen eines vergangenen Zeitintervalls gültig. In der Augenblicksdarstellung der Figur 3 umfasst das Synchronisationsfenster die beiden Zeitintervalle um t4. In diesem Synchronisationsfenster ist der Dienst schon unter der neuen Adresse a3 aber auch noch unter der alten Adresse a4 sowie der unveränderten Adresse a2 abrufbar. Das Synchronisationsfenster ermöglicht eine einfache Synchronisation zwischen Client C und Server S.

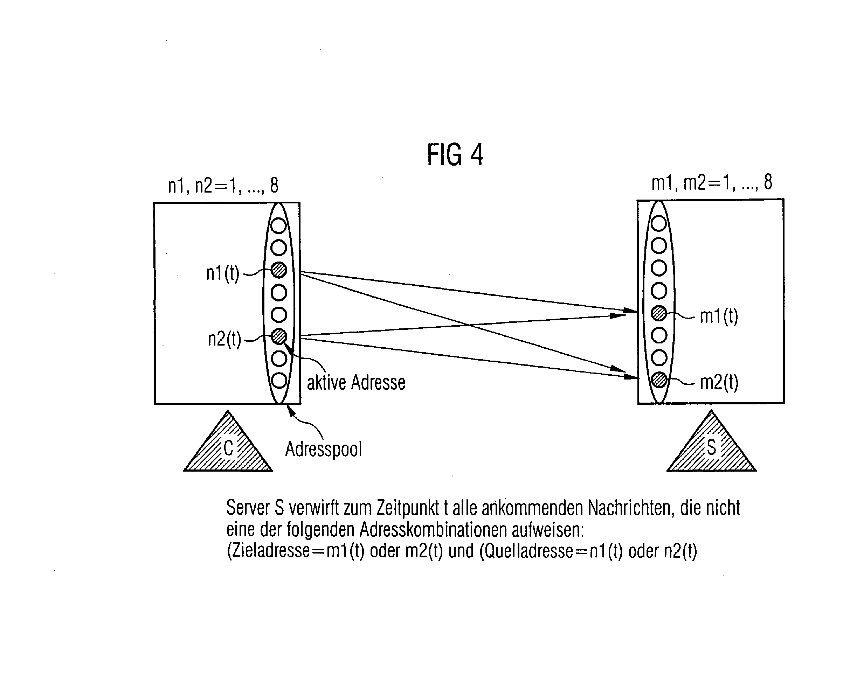

Die Figur 4 zeigt eine spezielle Ausprägung des erfindungsgemäßen Verfahrens, bei der aktive Quelladressen der Clients die Anfragen authentifizieren. Der Server S akzeptiert nur Anforderungen, wenn diese einerseits durch eine richtige aktive Netzadresse erfolgen und andererseits von einer bestimmten Netzadresse kommen. Eine berechtigte Anforderung muss also zwei Kriterien genügen: Zum einen muss die Zieladresse stimmen, zum anderen muss die Anfrage von einer bestimmten Quelladresse her rühren. In Figur 4 ist dies schematisch dargestellt. Client C und Server S verwenden mehrere Adressen aus einem Adresspool. Die Adressen sind in Figur 4 durch Kreise dargestellt; aktive Netzadressen sind grau hinterlegt. In der Darstellung der Fig.4 sind der Einfachheit wegen nur acht Adressen gezeigt. In Wirklichkeit verwalten Client C und Server S natürlich mehrere zehntausend Netzadressen. Im dargestellten Zeitpunkt akzeptiert der Server S nur Anfragen die an m1 und m2 gesendet werden und die von n1 bzw. n2 stammen. Der Server verwirft in diesem Zeitpunkt alle ankommenden Nachrichten, die nicht der Zieladresse m1 oder m2 und der Quelladresse n1 oder n2 zugeordnet werden können. Die Sicherheit des Verfahrens kann darüber hinaus erhöht werden, wenn neben der aktiven Zieladresse auch die Quelladresse zeitlich variiert wird. In Figur 4 sind diese aktiven Quelladressen n1(t) und n2(t) grau hinterlegt. Die Wahrscheinlichkeit, dass ein Angreifer durch Zufall eine aktive Kombination dieser Netzadressen herausfindet, ist äußerst gering.

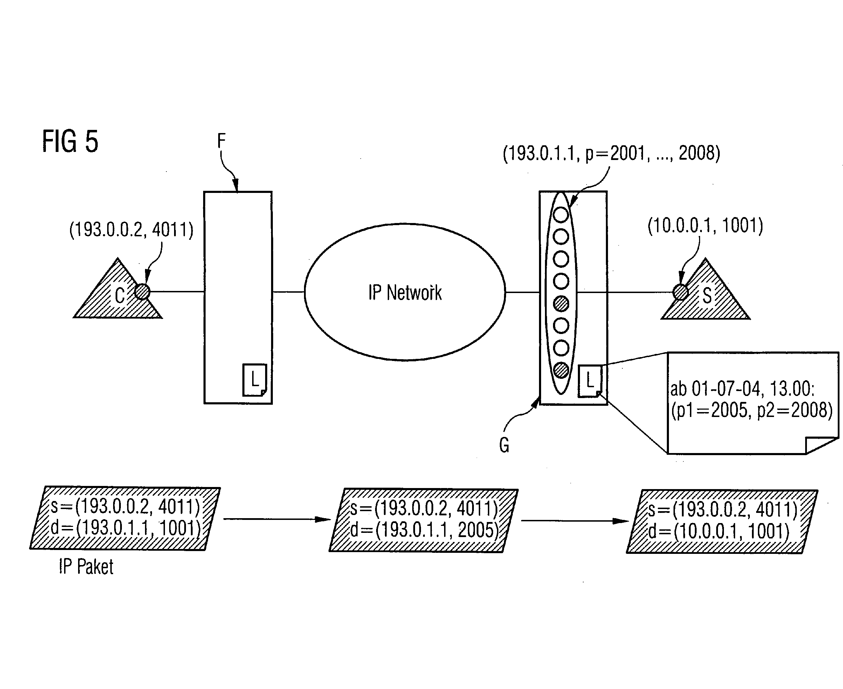

Eine erfindungsgemäße Einrichtung ist in Figur 5 in einer vereinfachten schematischen Darstellung gezeigt. Die Firewall wird durch zusätzliche Schutzeinrichtungen realisiert, die jeweils den Server S und den Client C vom IP-Network trennen. In diesen Geräten ist das erfindungsgemäße Verfahren implementiert. Bei der Anforderung eines Dienstes werden IP-Pakete von den Clients an den Server S gerichtet. Im Folgenden wird für die Darstellung der IP-Adressen die üblicherweise verwendete Punkt-Dezimal-Notation benutzt. Die 32 Bit lange binäre Zeichenfolge ist in 4 Gruppen zu je acht Bits untergliedert. Dem Server S ist eine private Netzadresse 10.0.0.1 zugeordnet. Er bietet auf den Port 1001 einen Dienst an. Der Server S ist in Figur 5 durch die Einrichtung G vom Internet getrennt. Der Client C hat die Netzadresse 193.0.0.2. Er sendet eine Anforderung in Form eines IP-Paketes mit der Ziel-Adresse d an die Netzadresse der Firewall 193.0.1.1. Im IP-Paket enthalten ist die Quell-Adresse s des Clients C (siehe IP-Paket links unten in Fig.5). Die Firewall G vertritt aus Sicht des Clients C den Server S; Einrichtung G fungiert als Proxy für Server S. Die Anforderung ist vom Client an das Ziel-Port 1001 des vom Server S angebotenen Dienstes gerichtet. Wie aus Figur 5 zu ersehen ist, ist auch der Client C nicht direkt an das IP-Network angeschlossen, sondern über eine zusätzliche Einrichtung F. Im Beispiel wird die Ziel-Port-Adresse 1001 in allen vom Client C abgesandten IP-Paketen vom Gerät F in die Adresse 2005 umgesetzt, bevor das IP-Paket in das IP-Network weiter geroutet wird. Auf Grund der Zieladresse 193.0.1.1 gelangt das IP-Paket zur Einrichtung G. Die Einrichtung G kann über einen Pool von acht Netzadressen angesprochen werden. In der Darstellung der Figur 5 sind dies acht Netzadressen 2001 bis 2008 als Kreise dargestellt. In der Einrichtung G ist wie in F die geheime Liste L gespeichert. Aus dieser geht hervor, welche der acht Adressen aktiv sind. Im Beispiel der Figur 5 gilt ab 01-07-04, 13.00: P1=2005 und p2=2008, dh. nur diese beiden Adressen sind aktiv. Anders ausgedrückt, die Einrichtung G verwirft alle Anfragen, die ab diesem Zeitpunkt nicht an p1=2005 bzw. p2=2008 gerichtet sind. In den akzeptierten IP-Paketen ersetzt die Einrichtung G die Ziel-IP-Adresse durch die IP-Adresse 10.0.0.1 des Servers S. Außerdem ersetzt die Einrichtung G die Portnummer des Ziels durch die Portnummer 1001 des Servers S. Damit ist im IP-Paket unter der Zieladresse d wieder die IP-Adresse und die Hardware-Adresse des Servers eingetragen.

Die Realisierung der erfindungsgemäßen Einrichtungen G bzw. F der Firewall kann durch Hard-, Soft- oder Firmware erfolgen. Die Einrichtungen G und F können also externe Geräte sein, die in die Verbindungsleitung zum IP-Network geschaltet sind.

Selbstverständlich kann die Erfindung sowohl zur Abwehr von Angriffen von einer Stelle (DoS) als auch zur Abwehr von Angriffen aus mehreren Stellen im Netz (DDoS) eingesetzt werden.

## Patentansprüche

1. Verfahren zur Abwehr von Angriffsdatenströmen auf Netzknoten in einem Kommunikationsnetz, das einen Übertragungskanal für die Übermittlung eines Dienstes zwischen einem dienstanbietenden Netzknoten (S) und einem dienstanfordernden Netzknoten (C) bereitstellt, **dadurch gekennzeichnet, dass** der dienstanbietende Netzknoten (S) den Dienst in aufeinander folgenden Zeitintervallen (t0-t1, t1-t2, ...) mit jeweils unterschiedlichen aktiven Netzadressen (a1, a2, ...) anbietet, die er vorab mit einer Klasse von ausgewählten dienstanfordernden Netzknoten vereinbart.

2. Verfahren nach Anspruch 1, **dadurch gekennzeichnet, dass** der dienstanbietende Netzknoten (S) den Dienst unter einer Menge von Netzadressen anbietet, von denen in einem Zeitintervall nur eine Teilmenge aktiv ist.

3. Verfahren nach Anspruch 2, **dadurch gekennzeichnet, dass** die Menge der Netzadressen zeitlich verändert wird (Fig.3).

4. Verfahren nach zumindest einem der Ansprüche 1 bis 3, **dadurch gekennzeichnet, dass** der dienstanbietende Netzknoten (S) die aktiven Netzadressen aus einer Vorschrift ermittelt, die nur dem dienstanbietenden Netzknoten und der Klasse ausgewählter Netzknoten bekannt ist.

5. Verfahren nach Anspruch 4, **dadurch gekennzeichnet, dass** die Vorschrift eine geheime Liste (L) ist, die einen Eintrag enthält, nach der die Teilmenge der aktiven Netzadressen verändert wird.

6. Verfahren nach Anspruch 4, **dadurch gekennzeichnet, dass** der dienstbereitstellende Netzknoten und die Klasse der ausgewählten Netzknoten die nächste zu verwendende Teilmenge der aktiven Netzadressen durch einen Pseudo-Zufallszahlengenerator berechnen wobei alle Pseudozufallszahlengeneratoren durch die gleiche nur obigen Netzknoten bekannte "Anfangszahl" ("Seed") initialisiert werden.

7. Verfahren nach Anspruch 4, **dadurch gekennzeichnet, dass** der dienstanbietende Netzknoten die aktuellen aktiven Netzadressen an den dienstanfordernden Netzknoten übermittelt.

8. Verfahren nach Anspruch 7, **dadurch gekennzeichnet, dass** die Übermittlung verschlüsselt erfolgt.

9. Verfahren nach Anspruch 4, **dadurch gekennzeichnet, dass** die dienstanfordernden Netzknoten periodische Anfragen an den dienstanbietenden Netzknoten richten und durch eine Abfrage aktive Netzadressen ermitteln.

10. Verfahren nach zumindest einem der vorstehenden Ansprüche, **dadurch gekennzeichnet, dass** der dienstanbietende Netzknoten eine Authentifizierung der Klasse der ausgewählten Netzknoten herstellt, wobei das Verfahren folgende zusätzliche Schritte umfasst:
1) Erfassen der Netz-Quelladressen eingehender Dienstanforderungen;
2) Vergleichen der Netz-Quelladressen mit einem Eintrag in einer Tabelle;
3) Bearbeiten der Dienstanforderung für den Fall der Übereinstimmung und Verwerfen der Dienstanforderung für den Fall der Nichtübereinstimmung.

11. Verfahren nach Anspruch 10, **dadurch gekennzeichnet, dass** die Netzquelladressen zeitlich verändert werden.

12. Firewall zur Abwehr eines Angriffsdatenstromes auf einen Netzwerkknoten eines Kommunikationsnetzes umfassend eine clientseitige Schutzeinrichtung (F), die zwischen einem dienstanfordernden Netzknoten (C) und einem Kommunikationsnetz (IP-Network) geschaltet ist, eine serverseitige Schutzeinrichtung (G), die zwischen einem dienstbereitstellenden Netzknoten (S) und dem Kommunikationsnetz (IP-Network) geschaltet ist, **dadurch gekennzeichnet, dass** die clientseitige Schutzeinrichtung (F) erste Mittel umfasst, die eine Ziel-IP-Adress und Portnummer eines vom Client (C) abgesandten IP-Pakets anhand einer Vorschrift in eine aktive IP-Adress und Portnummer der serverseitige Schutzeinrichtung (G) umsetzen, dass die serverseitige Schutzeinrichtung zweite Mittel umfasst, die aktive IP-Adress und Portnummern in eine IP-Adress und Portnummer des Servers S umsetzen, wobei die ersten und zweiten Mittel jeweils auf Speichermittel (L) zugreifen, die eine gemeinsame Vorschrift enthält, nach der aktive IP-Adress und Portnummern (Netzadressen) verändert werden.

13. Firewall nach Anspruch 12, **dadurch gekennzeichnet, dass** die Vorschrift eine Tabelle enthält in der eine Zuordnung zwischen Zeitintervallen und aktive Netzadressen (IP Adress und Portnummern) enthalten ist.
